(19) **Europäisches Patentamt / European Patent Office / Office européen des brevets**

(11) **EP 2 397 793 B1**

(12) # EUROPEAN PATENT SPECIFICATION

(45) Date of publication and mention
of the grant of the patent:
**01.05.2013 Bulletin 2013/18**

(51) Int Cl.:
*F25B 1/00* *(2006.01)* *F25B 13/00* *(2006.01)*
*F25B 31/00* *(2006.01)*

(21) Application number: **11175740.7**

(22) Date of filing: **23.02.2004**

(54) **Refrigerating cycle apparatus**

Kältekreislaufvorrichtung

Appareil de circuit de réfrigération

(84) Designated Contracting States:
**ES GB IT**

(30) Priority: **27.02.2003 JP 2003051317**

(43) Date of publication of application:
**21.12.2011 Bulletin 2011/51**

(62) Document number(s) of the earlier application(s) in
accordance with Art. 76 EPC:
**04713659.3 / 1 605 211**

(73) Proprietor: **Toshiba Carrier Corporation
Tokyo 105-8001 (JP)**

(72) Inventor: **Ueno, Kiyotaka
Fuji-shi, Shizuoka 416-8521 (JP)**

(74) Representative: **Granleese, Rhian Jane
Marks & Clerk LLP
90 Long Acre
London WC2E 9RA (GB)**

(56) References cited:
**EP-A2- 0 597 597**

EP 2 397 793 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a refrigerating cycle apparatus equipped with a plurality of high pressure type compressors having a casing held with an oil.

Background Art

In a refrigerating cycle apparatus, a plurality of high pressure type compressors are provided having a casing held with a lubricating oil in which the discharging tube and suction tube of these compressors are mutually connected. In the prior art, an imbalance occurs between an amount of lubricating oil discharged from each compressor in a state to be mixed in a refrigerant and an amount of lubricating oil returned back to the respective compressor and sometimes there will occur an oil shortage in the compressors. If such oil shortage occurs, the oil is interrupted in sliding motion parts of the compressor, thus exerting a bad effect on the service life of the compressor.
In order to handle such an unfavorable situation, a refrigerating cycle apparatus has been proposed (for example, JPN PAT APPLN KOKOKU PUBLICATION NO. 3197768) in which an oil balancing tube is connected to a suction tube of an associated compressor to allow the oil to be returned back to the associated compressor.
Further, a refrigerating cycle apparatus has also been proposed (for example, JPN PAT APPLN KOKAI PUBLICATION NO. 2002-242833) in which a single collection tube is connected through an electronic opening/closing valve to a corresponding oil balancing tube connected to a respective compressor and the collecting tube is branch-connected to suction tubes of the respective compressors.
In the refrigerating cycle apparatus where the oil balancing tube is connected to the suction tube of the associated compressor to allow the oil to be returned back to the associated compressor, the oil balancing tubes involve a complex connection. In the case of three or more compressors, when one of these compressors fails, an oil supply cannot be effected between the defective compressor and the compressor on the oil balancing tube-connected side.
In the refrigerating cycle apparatus where a single collection tube is connected through an electronic opening/closing valve to the corresponding oil balancing tube connected to each compressor and the collection tube is branch-connected to the corresponding suction tube of the compressor, a now operating compressor and now stopped compressor are run in a mixed state and, in this case, the electronic valve is so controlled as to prevent an oil from being returned from the now operating compressor toward the now stopped compressor. It is, therefore, necessary to provide expensive electronic valves corresponding in number to the compressors and a high cost is involved.

Disclosure of Invention

In one aspect of the present invention, a refrigerating cycle apparatus is provided which can ensure a simpler structure in spite of the number of compressors involved, reduce costs, and eliminate an oil shortage positively and quickly in the respective compressors.
According to the present invention, there is provided a refrigerating cycle apparatus as recited in claim 1.
In an embodiment, a check valve configured to prevent returning-back of the oil is provided at the respective first oil balancing tube.
In an embodiment, the resistance of the respective second pressure reducing device is smaller than the resistance of the first pressure reducing device and that of the third pressure reducing device.
In an embodiment, the gas/liquid separator comprises a buffer tank having a diameter larger than those of the first oil balancing tube, second oil balancing tube and bypass tube.
In an embodiment the gas/liquid separator comprises an oil tank.
In an embodiment, the respective compressor comprises a variable-capacity type driven by an inverter.
In an embodiment, the refrigerating cycle apparatus further comprises:

a first temperature detector configured to detect a temperature of the respective first oil balancing tube at a point further downstream than the first pressure reducing device;
a second temperature detector configured to detect a temperature of the bypass tube at a point further downstream than the second pressure reducing device;
a third temperature detector configured to detect a temperature of an oil flowing out of the gas/liquid separator; and
a detection section configured to detect an amount of oil in the casing of the respective compressor in accordance with a detection temperature of the respective temperature detector.

In an embodiment, the refrigerating cycle apparatus further comprises:

a decision section configured to decide whether or not the amount of oil detected by the detection section is insufficient; and

a control section configured to, when the decision section decides that the amount of oil is insufficient, open the second opening/closing valve at an outdoor unit on the oil amount low side and open the first opening/closing valve and third opening/closing valve on the remaining outdoor unit.

Brief Description of Drawings

FIG. 1 is a view showing an arrangement which is useful for understanding the invention;
FIG. 2 is a view showing an arrangement which is useful for understanding the invention;
FIG. 3 is a view showing an arrangement of a first embodiment, and
FIG. 4 shows a flowchart for explaining the operation of the first embodiment.

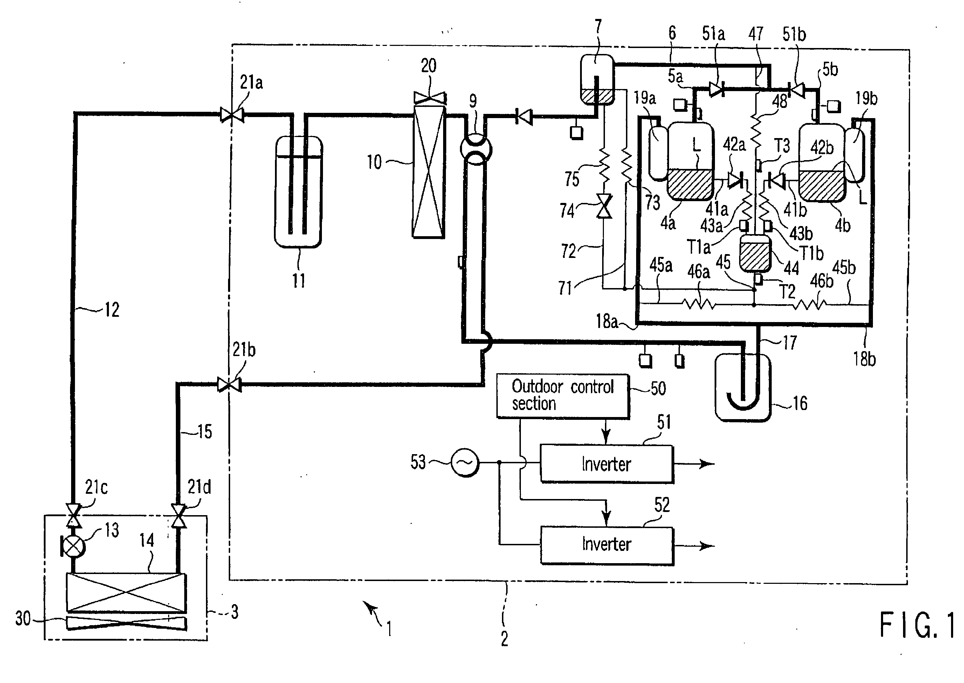

[1] With reference to FIG. 1, an explanation will be made below about an example useful for understanding the present invention.

A refrigerating cycle apparatus 1 is comprised of an air conditioner comprising an outdoor unit 2 and an indoor unit 3. The outdoor unit 2 comprises compressors 4a, 4b, an oil separator 7, a four-way valve 9, an outdoor heat exchanger 10, a liquid tank 11, an accumulator 16, an outdoor fan 20, an outdoor control section 50, inventers 51, 52, and so on. The indoor unit 3 comprises an electronic expansion valve 13, an indoor heat exchanger 14, an indoor fan 30, an indoor control section (not shown) and so on. The outdoor unit 2 and indoor unit 3 are connected by a liquid tube 12 and gas tube 15.

The outdoor control section 50 controls the operation of the outdoor unit 2. The inverters 51 and 52 rectify the voltage of a commercial AC power supply 53 and convert the rectified voltage to an AC voltage of frequencies corresponding to an instruction of the outdoor control section 50 and output it. The compressors 4a and 4b are of a variable capacity type and are driven by the outputs of the inverters 51 and 52.

(Explanation on the Tube Arrangement Around the Compressors)

The compressors 4a, 4b are of a high pressure type such that, during their operation, the pressure becomes higher in their casing. An oil L for lubrication is held in the casing. Discharge tubes 5a and 5b are connected to the refrigerant discharge outlets of the compressors 4a and 4b and then connected to a high pressure side tube 6. Check valves 51a and 51b are provided on the discharge tubes 5a and 5b, respectively. Suction tubes 18a and 18b are connected to the refrigerant suction inlets of the compressors 4a and 4b, respectively, and connected to a low pressure side tube 17. To the suction tubes 18a and 18b are connected suction cups 19a and 19b, respectively.

(Explanation on Parts Around an Oil Balancing Circuit)

An explanation will now be made below about the oil balancing circuit. First balancing tubes 41a and 41b are connected at their one end to a predetermined height position on the sidesurfaces of the compressors 4a and 4b. At these oil balancing tubes 41a and 41b are provided check valves 42a and 42b and, for example, capillary tubes 43a, 43b serving as a first pressure reducing device. First temperature sensors T1a, T1b are provided on the downstream side of the capillary tubes 43a, 43b. The oil balancing tubes 41a, 41b are collectively connected at the other terminal to the buffer tank 44 serving as a gas/liquid separator.

The buffer tank 44 has the function of effecting a separation into a gas and liquid and temporarily stores any excess oil L flowing from the oil balancing tubes 41a, 41b.

One end of a second oil balancing tube 45 is connected to the bottom of the buffer tank 44 and the other end of the second oil balancing tube 45 is branched into two oil balancing tubes 45a and 45b and connected to the suction tubes 18a and 18b. On one end side of the second balancing tube 45 is mounted a third temperature sensor T2 which detects a temperature of the oil L flowing out of the buffer tank 44. For example, capillary tubes 46a, 46b serving as a second pressure reducing device are provided on the oil balancing tubes 45a, 45b.

A bypass tube 47 is connected between the high pressure side tube 6 and the buffer tank 44 and, for example, a capillary tube 48 serving as a third pressure reducing device is provided at the bypass tube 47. A third temperature sensor T3 is mounted in a downstream side of the capillary tube 48 at the bypass tube 47.

It is to be noted that the buffer tank 44 has a larger diameter than the oil balancing tubes 41a, 41b, oil balancing tubes 45, 45a, 45b and bypass tube 47.

(Conditions of the Capillary Tube)

The resistances of the capillary tube 46a, 46b at the oil balancing tubes 45a, 45b are smaller than those of the capillary tubes 43a, 43b at the oil balancing tubes 41a, 41b and that of the capillary tube 48 at the bypass tube 47. Thus, the oil L in the buffer tank 44 flows more easily toward the oil balancing tubes 45a, 45b.

(Explanation on the Oil Separator and Oil Return Tube)

Oil return tubes 71, 72 are connected between the oil separator tube 7 and the oil balancing tube 45. The oil return tube 71 has its one end connected to a predetermined height position on the sidesurface of the oil separator 7. A capillary tube 73 is provided at the oil return tube 71. The oil L in the oil separator 7 stored at a higher position than the connection position of the oil return tube 71 flows into the oil return tube 71 and then through the capillary tube 73 into the oil balancing tube 45. The oil L flowing into the capillary tube 45 is branched into the oil balancing tubes 45a, 45b flows through the capillary tubes 46a, 46b into the suction tubes 18a, 18b and is sucked into the compressors 4a, 4b together with the refrigerant circulated through the refrigerating cycle.
The oil return tube 72 is connected below the oil separator 7. At the oil return tube 72, an oil opening/closing valve 74 and capillary tube 75 are provided.

(Explanation on the refrigerant flow in the refrigerating cycle)

When the compressors 4a, 4b are operated, the refrigerants discharged from the compressors 4a, 4b flow through the discharge tube 5a, 5b into the high pressure side tube 6 and, by the high pressure side tube 6, the refrigerant flows into the oil separator 7 where the refrigerant and oil L are separated. The refrigerant in the oil separator 7 flows through the four-way valve 9.
The refrigerant flowing through the four-way valve 9 flows at a cooling operation time into the outdoor heat exchanger 10 where a heat exchanger with the outdoor air is made to allow condensation (liquefaction). The refrigerant passing through the outdoor heat exchanger 10 sequentially flows through the liquid tank 11, a pack valve 21a, a liquid tube 12 and a pack valve 21c into the indoor unit 3. The refrigerant flowed through the indoor unit 3 flows through the expansion valve 13 into the indoor heat exchanger 14 where a heat exchange with the indoor air is made to effect vaporization. The refrigerant passing through the indoor heat exchanger 14 sequentially flows through a pack valve 21d, gas tube 15 and pack valve 21b into the outdoor unit 2. The refrigerant flowed into the outdoor unit 2 flows through the four-way valve 9 into the accumulator 16 and, from the accumulator 16, through the low pressure side tube 17 and suction tubes 18a, 18b into the compressors 4a, 4b.
At a heating operation time, the four-way valve 9 is switched to allow the refrigerant to flow in an opposite direction.

(Flow of the Oil in the Oil Balancing Circuit)

If the oil levels in the casings of the compressors 4a, 4b are higher than the connection positions of the oil balancing tubes 41a, 41b, the oil L exceeding the connection position level flows as an excess oil portion into the oil balancing tubes 41a, 41b. The oil L flowed into the oil balancing tubes 41a, 41b flows through the capillary tubes 43a, 43b into the buffer tank 44. Into the buffer tank 44, a higher pressure refrigerant gas of a very small amount flows from the high pressure side tube 6 through the bypass tube 47. By a pressure applied through the bypass tube 47 and a suction pressure applied from the suction tubes 18a, 18b through the oil balancing tubes 45, 45b and oil balancing tube 45, the oil L flowed into the buffer tank 44 flows out from the oil balancing tube 45 and, from there, is branched to the oil balancing tubes 45a, 45b. The branched oil is flowed through the capillary tubes 46a, 46b into the suction tubes 18a, 18b. The oil L flowed into the suction tubes 18a, 18b, together with the refrigerant circulated through the refrigerating cycle, is sucked into the compressors 4a, 4b through the suction tubes 19a, 19b.
There are sometimes cases where an oil level imbalance will occur between the casings of the compressors 4a and 4b, such as where the oil level in the casing of the compressor 4a is higher than the connection position of the oil balance tube 41a while, on the other hand, the oil level in the casing of the compressor 4b is lower than the connection position of the oil balance tube 41b. In this case, the oil L flows in the oil balancing tube 41a on the compressor 4a side while, on the other hand, a higher pressure refrigerant gas flows into the oil balance tube 4b on the compressor 4b side. The flowed oil L and refrigerant gas are collected into the buffer tank 44. The collected gas L and refrigerant gas are mutually separated in the buffer tank 44 and, when flowing out of the buffer tank 44, flow in a combined state into the oil balancing tube 45. The oil and refrigerant flowed in the combined state into the oil balancing tube 45 are equally branched into the oil tubes 45a, 45b by the resistance actions of the capillary tubes 46a, 46b.
By doing so, the oil is moved from the compressor 4a on a greater oil level side into the compressor 4b on the smaller oil level side and the oil surface levels in the casings of the compressors 4a, 4b are quickly balanced.

On the other hand, the refrigerants from the compressors 4a, 4b are discharged and, with this, part of the oils L in the compressors 4a and 4b flow out into the discharge tubes 5a, 5b. The discharged oil L flows out from the high pressure side tube 6 into the oil separator 7. The oil separator 7 separates the oil L from the refrigerant gas and held therein. Of the oil L held in the oil separator 7, an oil corresponding to a portion exceeding the connection position of the oil return tube 71 flows into the oil return tube 71. The oil L flowed into the oil return tube 71 is returned through the oil balancing tube 45 and oil balancing tubes 45a, 45b back to the compressors 4a, 4b.

Where the oil surface levels in the casings of the compressors 4a, 4b are both lowered, the opening/ closing valve 74 on the oil return tube 72 is opened and, by doing so, the oil in the oil separator 7 is returned through the oil balancing tube 45 and oil balancing tubes 45a and 45b back to the compressors 4a and 4b.

(Effects of Buffer Tank 44)

Where either one of the compressors 4a, 4b is stopped, for example, the compressor 4a is stopped, even if the oil L flowed during operation from the compressor 4b into the oil balancing tube 41b tries to flow through the buffer tank 44 and oil balancing tube 41a into a now stopped compressor 4a, such a flow is prevented by the check valve 42a.

If the checking action of the check valve 42b is not completely ensured and a very small flow of the oil L from the oil balancing tube 41a toward the compressor 4a side may occur, an amount of oil L in a now operated compressor 4b is gradually decreased and the compressor 4b soon becomes short of oil.

However, the buffer tank 44 is present between the oil balancing tube 41b and the oil balancing tube 41a and, since, in the buffer tank 44, a lighter weight refrigerant moves upward and a heavier weight oil L downward, it is possible to previously prevent such inconvenience that the oil L flowing from a now operated compressor 4b into the oil balancing tube 41b flows into a now stopped compressor 4a through the buffer tank 44 and oil balancing tube 41a. It is, therefore, possible to prevent any unwanted movement of the oil L from the now operated compressor 4b to the now stopped compressor 4a.

It is, therefore, nor necessary to adopt an expensive flow-checking electronic valve which might be required in a conventional technique. It is therefore also possible to avoid any costs associated therewith.

Since the oil balancing tubes 41a and 41b are so constructed as to be collectively connected to the buffer tank 44, more compressors, if needed, can be constructed without adopting a complex structure, and it is also possible to avoid any complex designing.

Since the pressure of a higher pressure refrigerant discharged from the compressors 4a, 4b is applied through the bypass tube 47 to the buffer tank 44, the distributive supply of the oil L from the buffer tank 44 to the compressors 4a, 4b can be positively and quickly completed while allowing the mounting position of the buffer tank 44 to be set in a freer and easier fashion.

Even if due to a malfunction of the compressor 4a, a back-up operation is performed by the compressor 4b, it is possible to prevent any unrequired movement of the oil L from a now operated compressor 4b to the malfunctioning compressor 4a and hence to constantly perform a back-up operation by the compressor 4b. With respect to a lowered ability caused by the malfunctioning compressor 4a, it is possible to back up the apparatus by a variable capacity operation of the compressor 4b by the use of the inverter 52. Since the compressors 4a, 4b are both inverter-driven in a variable capacity mode, even if one of these fails, it is possible to perform a back-up operation in a variable capacity mode.

[2] Second example useful for understanding the present invention.

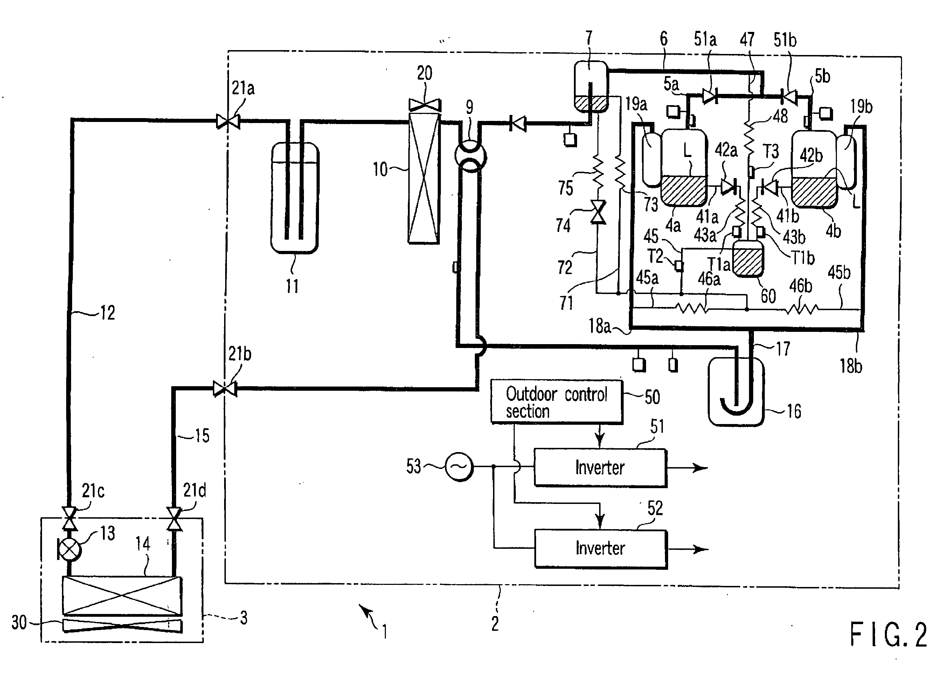

As shown in FIG. 2, an oil tank 60 is provided in place of the buffer tank 44 in the first example. One end of an oil balancing tube 45 is connected, at a predetermined height, to a sidesurface of the oil tank 60.

Of an oil L held in the oil tank 60, an oil portion exceeding a connection position of the oil balancing tube 45 flows as an excess portion into the oil balancing tube 45. The oil L flowed into the oil balancing tube 45 flows into suction tubes 18a and 18b through oil balancing tubes 45a and 45b and capillary tubes 46a and 46b and is, together with a refrigerant circlulated through a refrigerating cycle, drawn into the compressors 4a and 4b.

(Effect of the Oil Tank)

Although the oil tank 60 has basically the same function as that of the buffer tank 44 in the first example, it has the feature that an amount of oil L held is greater than that of the buffer tank 44.

That is, since more than a predetermined amount of oil L can be held in the oil tank 60, even if an amount of oil L flowing out from the compressors 4a, 4b is increased due to a change in an operation state, etc., the oil L can be quickly supplied to the compressors 4a, 4b without delaying its increase. The supply of the oil L from the oil tank 60 is quicker than in the case of supplying the oil L in an oil separator 7 through an oil return tube 71.

The other structure, function and effects are the same as those in the first example.

[First Embodiment]

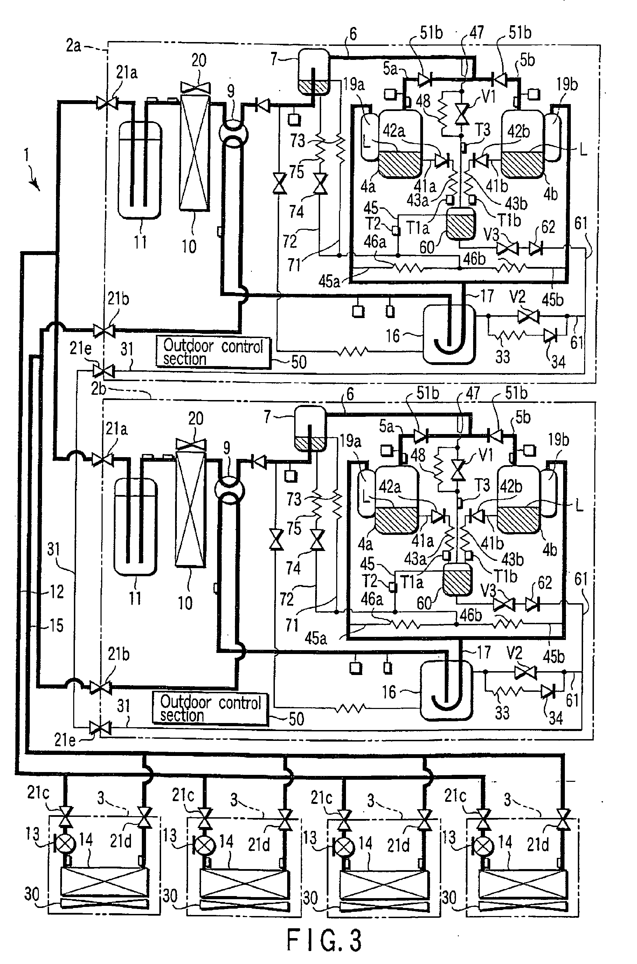

As shown in FIG. 3, an air conditioner comprises a plurality of outdoor units 2a, 2b and a plurality of indoor units 3. The outdoor unit 2a has the same structure as the outdoor unit 2 of the second example and has compressors 4a, 4b. The outdoor unit 2b has the same structure as the outdoor 2 of the second example and has compressors 4a, 4b.

For respective outdoor units 2a, 2b, a first opening/closing valve V1 is connected in parallel with a capillary tube 48 in a bypass tube 47.

For the respective outdoor units 2a, 2b, a third oil balancing tube 61 is connected from the bottom of an oil tank 60 toward a low pressure side tube 17. Second and third opening/closing valves V2 and V3 are provided at the oil balancing tube 61. Further, a series circuit of a capillary tube 33 and check valve 34 is connected in parallel with the opening/closing valve V2 in the oil balancing tube 61.

Between those mutual connections at a position between the opening/closing valves V2 and V3 of the oil balancing tube 61 in the respective outdoor units 2a, 2b, a balancing tube 31 is connected through pack valves 21e, 21e.

There are sometimes cases where, at the operation times of the two outdoor units 2a and 2b, an imbalance in their oil amounts will occur between these mutual outdoor units 2a and 2b; for example, an oil amount in the compressor of the outdoor unit 2a side is increased while, on the other hand, an oil amount in the compressor of the outdoor 2b side decreases.

[Explanation on the Detection of the Oil Amount]

If the oil amount of the compressor in the respective outdoor units 2a and 2b is at a correct level, an oil L flows in the oil balancing tubes 41a, 41b and it flows into the oil tank 60. And the oil L in the oil tank 60 flows into the oil balancing tube 45 and is supplied to the suction side of the respective compressors 4a, 4b.

When an oil amount of the compressor in the outdoor units 2a, 2b becomes insufficient, a refrigerant, not an oil L, flows into the oil balancing tube 41a, 41b and an oil surface level in the oil tank 60 is lowered and, for this reason, the refrigerant flows from the oil tank 60 into the oil balancing tube 45.

The temperature of the oil L or the refrigerant flowing into the oil balancing tubes 41a, 41b is detected by a corresponding temperature sensor T1a, T1b and the temperature of the oil L or the refrigerant flowing into the oil balancing tube 45 is detected by a temperature sensor T2. The detection temperatures of the temperature sensors T1a, T1b, T2 become higher when the oil L is passed than when the refrigerant is passed. Further, the temperature of the refrigerant flowing through the bypass tube 47 is detected by a temperature sensor T3.

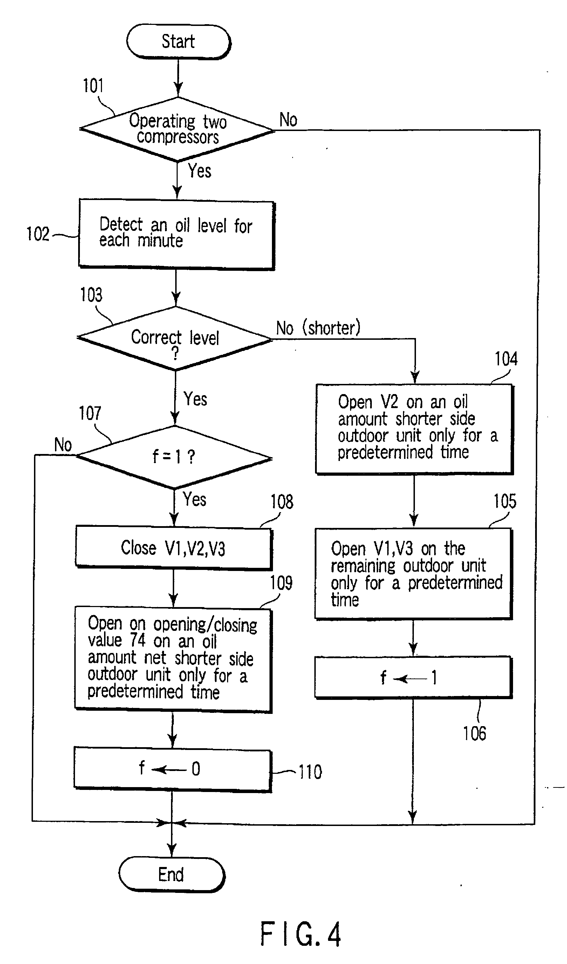

As shown in the flowchart of FIG. 4, when two compressors 2a, 2b are operated (YES at step 101), an oil amount of a compressor in the outdoor units 2a and 2b is detected, for each predetermined time (for example, for each minute) based on detection temperatures of the temperature sensors T1a, T1b, T2, T3 (step 102). In this case, it is to be noted that detection can proceed continuously, instead of only on a minute-by-minute basis.

That is, where the oil amounts of all the compressors are at a correct level, an oil L flows into the oil balancing tubes 41a, 41b and 45 and the detection temperatures of the temperature sensors T1a, T1b, T2 become higher than the detection temperature (the temperature of the refrigerant flowing through the bypass tube 47) of the temperature sensor T3. Then, the following relation is established, noting that $\alpha 1 > \beta 1 > 0$.

$$T1a - T3 \geqq \alpha 1, \quad T1b - T3 \geqq \alpha 1$$

$$T1a - T2 \geqq \beta 1, \quad T1b - T2 \geqq \beta 1$$

Where the oil surface levels of all the compressors are too low, the refrigerant flows into the oil balancing tubes 41a, 41b and oil balancing tube 45 and the detection temperatures of the temperature sensors T1a, T1b, T2 become lower than the detection temperature (the temperature of the refrigerant flowing through the bypass tube 47) of the temperature sensor T3. The following relation is thus established, where that $\alpha 2 < \beta 2$ and $\alpha 2 < 0$.

$$T2 - T3 \leqq \alpha 2, \quad T1a - T3 \leqq \beta 2, \quad T1b - T3 \leqq \beta 2$$

The oil amount in the respective compressor can be detected based on the relation of these detection temperatures.

When, for example, an oil amount shortage is detected at, for example, the outdoor unit 2a of the outdoor units 2a and 2b (NO at step 103), the opening/closing valve V2 in the outdoor unit 2a is opened only during a predetermined time t (step 104) and the opening/closing valves V1, V3 in the outdoor unit 2b are opened only during the same predetermined time period t (step 105). And as an indicator that the opening/closing valves V1, V2 and V3 are opened, a flag f is set to "1" (step 106).

By opening the opening/closing valves V1, V3 on an oil amount "not low" side, the oil L stored in the oil tank 60 of the outdoor unit 2b flows through the oil balancing tube 61 into a balancing tube 31. By opening the opening/closing valve V2 in the outdoor unit 2a on an oil amount "low" side, the oil L flowed into the balancing tube 31 is led to the low pressure side tube 17 of the outdoor unit 2a. The oil L led to the low pressure side tube 17 is drawn into the compressors 4a and 4b. Thus, the oil amount detection for each minute period continues.

When the oil amount shortage of the outdoor unit 2a is not detected (YES at step 103), if the flag f is "1" (YES at step 107), all the opening/closing valves V1, V2, V3 are closed (step 108) under the decision that the oil amount balance between the outdoor units 2a and 2b is effected.

After all the opening/closing valves V1, V2, V3 are closed, an opening/closing valve 74 in the outdoor unit 2b on the oil amount "not low" side is opened only during a predetermined period (step 109). By opening the opening/closing valve 74, the oil L held in the oil separator 7 is replenished to the oil tank 60. The flag f is reset to "0" (step 110).

As set out above, the oil tanks of the outdoor units 2a and 2b are shared by both of the outdoor units 2a, 2b.

By adjusting the predetermined time t for opening the opening/closing valves V1, V2, V3, an amount of oil L supplied from the oil tank 61 can be restricted solely to that which is necessary. By doing so, it is possible to avoid the situation such that an oil shortage still occurs in the outdoor unit on the oil supply side

Where three or more compressors in one outdoor unit are mounted, the number of temperature sensors T1 is accordingly increased and, by doing so, similar processes of oil amount detection and oil amount balancing can be performed.

The other arrangement, function and effects of the third embodiment are the same as those of the second example.

Although, in the first embodiment, the detection temperature of the temperature sensor T3 mounted at the bypass tube 47 is used for oil detection, use may be made of in place of the temperature sensor T3, a temperature sensor mounted on at least one of discharge tubes 5a, 5b of the compressors 4a, 4b and, in this case, the detection temperature of the temperature sensor is used for oil amount detection. Or a pressure sensor Pd may be mounted on a high pressure side tube 6 and, in this case, the refrigerant temperature is taken from the detection pressure of the pressure sensor so as to use it for oil amount detection.

Although the detection temperature of the temperature sensor T2 on the oil balancing tube 45 is used for oil amount detection, the oil temperature at the oil balancing tube 45 may be taken from a temperature sensor T3 on the bypass tube 47, without the use of the temperature sensor T2 and, in this case, the detected temperature is employed for oil amount detection.

The present invention is not restricted to the above-mentioned embodiments and various changes or modifications of the present invention may be made without departing from the scope of the present invention as defined by the appended claims.

Industrial Applicability

The present invention can be utilized, for example, for an air conditioner.

**Claims**

1. A refrigerating cycle apparatus (1), with a plurality of outdoor units (2a, 2b), and equipped for each of the outdoor units, with a plurality of high pressure type compressors (4a, 4b) having a casing held with an oil, and having a high pressure side tube (6) to which a discharge tube of the compressor (5a, 5b) is connected and a low pressure side tube (17) to which a suction tube of the compressor (18a, 18b) is connected, comprising:

   a first oil balancing tube (41) for each outdoor unit, configured to allow a flowing-in of an excess portion of the oil held in the casing of the respective compressor (4a, 4b);
   **characterized by** further comprising:

      a first pressure reducing device (43) configured to be mounted on the first oil balancing tube;
      an oil tank (60), for each outdoor unit, configured to allow a flowing-in of the oil in the respective first oil balancing tube (41);

a second oil balancing tube (45), for each outdoor unit, configured to connect the oil tank (60) and the suction tube (18);

a second pressure reducing device (46) configured to be mounted on the respective second oil balancing tube (45);

a bypass tube (47) for each outdoor unit, configured to be connected between the high pressure side tube (6) and the oil tank (60);

a third pressure reducing device (48) configured to be mounted on the bypass tube (47)

a first opening/closing valve (V1) configured to be connected in parallel with the third pressure reducing device (48);

a third oil balancing tube (61), for each outdoor unit, configured to be connected between the oil tank (60) and the low pressure side tube (17);

second and third opening/closing valves (V2 and V3) configured to be provided at the respective third oil balancing tube (61); and

a balancing tube (31) configured to be connected between mutual connections at a position between the second and third opening valves (V2 and V3) of the third oil balancing tube (61).

2. A refrigerating cycle apparatus according to claim 1 wherein the respective second oil balancing tube (45) is connected to a predetermined height position in the oil tank (60) to allow a flowing-in of an oil portion present at a position higher than this connection position.

3. A refrigerating cycle apparatus according to claim 1, wherein the second oil balancing tube (45) is branched into a plurality of sections (45a, 45b) partway from the oil tank toward the respective suction tubes.

4. A refrigerating cycle apparatus according to claim 1, wherein the respective compressor (4a, 4b) is of a variable capacity type driven by an inverter.

5. A refrigerating cycle apparatus according to claim 1, further comprising:

a first temperature detector (T1) configured to detect a temperature of the respective first oil balancing tube (41) at a point further downstream than the first pressure reducing device (43);

a second temperature detector (T3) configured to detect a temperature of the bypass tube (47) at a point further downstream than the second pressure reducing device;

a third temperature detector (T2) configured to detect temperature of the oil flowing out of said gas/liquid separator (60); and

a detection section configured to detect an amount of oil in the casing of the respective compressor in accordance with a detection temperature of the respective temperature detector.

6. A refrigerating cycle apparatus according to claim 5, further comprising:

a decision section configured to decide whether or not the amount of oil detected by the detection section is insufficient; and

a control section (50) configured to, when the decision section decides that the amount of oil is insufficient, open the second opening/closing valve (V2) at the outdoor unit (2a) on the oil amount low side and open the first opening/closing valve (V1) and third opening/closing valve (V3) on the remaining outdoor units (2b).

**Patentansprüche**

1. Kältekreislaufvorrichtung (1) mit einer Vielzahl von Außeneinheiten (2a, 2b) und für jede der Außeneinheiten ausgerüstet mit einer Vielzahl von Hochdruckverdichtern (4a, 4b) mit einem Gehäuse, das mit einem Öl gefüllt ist, und mit einem hochdruckseitigen Rohr (6), mit dem ein Entspannungsrohr des Kompressors (5a, 5b) verbunden ist, und einem niederdruckseitigen Rohr (17), mit dem ein Saugrohr des Kompressors (18a, 18b) verbunden ist, umfassend:

ein erstes Ölausgleichsrohr (41) für jede Außeneinheit, das dafür konfiguriert ist, einen Zufluss eines überschüssigen Anteils des im Gehäuse des jeweiligen Verdichters (4a, 4b) enthaltenen Öls zu ermöglichen; **dadurch gekennzeichnet, dass** sie ferner umfasst:

eine erste Druckreduziervorrichtung (43), die dafür konfiguriert ist, an dem ersten Ölausgleichsrohr angebracht zu werden;

einen Ölbehälter (60) für jede Außeneinheit, der dafür konfiguriert ist, einen Zufluss des Öls in dem jeweiligen ersten Ölausgleichsrohr (41) zu ermöglichen;

ein zweites Ölausgleichsrohr (45) für jede Außeneinheit, das dafür konfiguriert ist, den Ölbehälter (60) und das Saugrohr (18) zu verbinden;

eine zweite Druckreduziervorrichtung (46), die dafür konfiguriert ist, am jeweiligen zweiten Öllusgleichsrohr (45) angebracht zu werden;

ein Umgehungsrohr (47) für jede Außeneinheit, das dafür konfiguriert ist, zwischen dem hochdruckseiten Rohr (6) und dem Ölbehälter (60) angeschlossen zu werden;

eine dritte Druckreduziervorrichtung (48), die dafür konfiguriert ist, am Umgehungsrohr (47) angebracht zu werden;

ein erstes Öffnungs/Schließventil (V1), das dafür konfiguriert ist, parallel mit der dritten Druckreduziervorrichtung (48) verbunden zu werden:

ein drittes Ölausgleichsrohr (61) für jede Außeneinheit, das dafür konfiguriert ist, zwischen dem Ölbehälter (60) und dem niederdruckseitigen Rohr (17) angeschlossen zu werden;

ein zweites und ein drittes Öffnungs/Schließventil (V2 und V3), die dafür konfiguriert sind, am jeweiligen dritten Ölausgleichsrohr (61) bereitgestellt zu werden; und

ein Ausgleichsrohr (31), das dafür konfiguriert ist, zwischen gegenseitigen Verbindungen an einer Stelle zwischen dem zweiten und dem dritten Öffnungsventil (V2 und V3) des dritten Ölausgleichsrohrs (61) angeschlossen zu werden.

2. Kältekreislaufvorrichtung nach Anspruch 1, wobei das jeweilige zweite Ölausgleichsrohr (45) mit einer Stelle in einer vorbestimmten Höhe des Ölbehälters (60) verbunden ist, um einen Zufluss eines Ölanteils, der an einer höheren Stelle als diese Verbindungsstelle vorhanden ist, zu ermöglichen.

3. Kältekreislaufvorrichtung nach Anspruch 1, wobei das zweite Ölausgleichsrohr (45) vom Ölbehälter sich in Richtung der jeweiligen Saugrohre nach einem Teil der Strecke vom Ölbehälter zu einer Vielzahl von Abschnitten (45a, 45b) verzweigt.

4. Kältekreislaufvorrichtung nach Anspruch 1, wobei der jeweilige Kompressor (4a, 4b) von einem variablen Kapazitätstyp ist, der durch einen Inverter angesteuert wird.

5. Kältekreislaufvorrichtung nach Anspruch 1, ferner umfassend:

einen ersten Temperaturdetektor (T1), der dafür konfiguriert ist, eine Temperatur des jeweiligen ersten Ölausgleichesrohrs (41) an einem Punkt weiter stromabwärts als die erste Druckreduziereinrichtung (43) zu detektieren:

einen zweiten Temperaturdetektor (T3), der dafür konfiguriert ist, eine Temperatur des Umgehungsrohres (47) an einem Punkt weiter stromabwärts als die zweite Druckreduziereinrichtung zu detektieren,

einen dritten Temperaturdetektor (T2), der dafür konfiguriert ist, die Temperatur des Öls, das aus dem Gase/Flüssigkeitsabscheider (60) strömt, zu detektieren; und

einen Detektionsabschnitt, der dafür konfiguriert ist, eine Ölmenge im Gehäuse des jeweiligen Kompressors entsprechend der Detektionstemperatur des jeweiligen Temperaturdetektors zu detektieren.

6. Kältekreislaufvorrichtung nach Anspruch 5, ferner umfassend:

einen Entscheidungsabschnitt, der dafür konfiguriert ist, zu entscheiden, ob die durch den Detektionsabschnitt detektierte Ölmenge unzureichend ist; und

einen Steuerungsabschnitt (50), der dafür konfiguriert ist, wenn der Entscheidungsabschnitt entscheidet, dass die Ölmenge unzureichend ist, das zweite Öffnungs/Schließventil (V2) an der Außeneinheit (2a) auf der Seite mit der niedrigen Ölmenge zu öffnen und das erste Öffnungs/Schließventil (V1) und das dritte Öffnungs/Schließventil (V3) an den verbleibenden Außeneinheiten (2b) zu öffnen.

**Revendications**

1. Appareil à cycle de réfrigération (1), avec une pluralité d'unités externes (2a, 2b) et équipé pour chacune des unités externes, d'une pluralité de compresseurs du type à haute pression (4a, 4b) comportant un carter contenant de l'huile, et comportant un tube côté haute pression (6) auquel un tube de refoulement du compresseur (5a, 5b) est raccordé et un tube côté basse pression (17) auquel un tube d'aspiration du compresseur (18a, 18b) est raccordé, comprenant :

   un premier tube d'équilibrage d'huile (41) pour chaque unité externe, configuré pour permettre une entrée d'une partie excédentaire de l'huile contenue dans le carter du compresseur (4a, 4b) respectif;
   **caractérisé en ce qu'**il comprend en outre :

   un premier dispositif de réduction de pression (43) configuré pour être monté sur le premier tube d'équilibrage d'huile ;
   un réservoir d'huile (60), pour chaque unité externe, configuré pour permettre une entrée de l'huile dans le premier tube d'équilibrage d'huile (41) respectif ;
   un deuxième tube d'équilibrage d'huile (45), pour chaque unité externe, configuré pour raccorder le réservoir d'huile (60) et le tube d'aspiration (18) ;
   un deuxième dispositif de réduction de pression (46) configuré pour être monté sur le deuxième tube d'équilibrage d'huile (45) respectif;
   un tube de dérivation (47) pour chaque unité externe, configuré pour être raccordé entre le tube côté haute pression (6) et le réservoir d'huile (60) ;
   un troisième dispositif de réduction de pression (48) configuré pour être monté sur le tube de dérivation (47), une première vanne d'ouverture/fermeture (V1) configurée pour être raccordée en parallèle au troisième dispositif de réduction de pression (48) ;
   un troisième tube d'équilibrage d'huile (61), pour chaque unité externe, configuré pour être raccordé entre le réservoir d'huile (60) et le tube côté basse pression (17) ;
   des deuxième et troisième vannes d'ouverture/fermeture (V2 et V3) configurées pour être prévues dans le troisième tube d'équilibrage d'huile (61) respectif ; et
   un tube d'équilibrage (31) configuré pour être raccordé entre des raccordements mutuels à une position située entre les deuxième et troisième vannes d'ouverture (V2 et V3) du troisième tube d'équilibrage d'huile (61).

2. Appareil à cycle de réfrigération selon la revendication 1, dans lequel le deuxième tube d'équilibrage d'huile (45) respectif est raccordé à une position prédéterminée en hauteur dans le réservoir d'huile (60) pour permettre une entrée d'une partie d'huile présente à une position plus haute que sa position de raccordement.

3. Appareil à cycle de réfrigération selon la revendication 1, dans lequel le deuxième tube d'équilibrage d'huile (45) se ramifie en une pluralité de sections (45a, 45b) au bout d'une partie du trajet à partir du réservoir d'huile vers les tubes de section respectifs.

4. Appareil à cycle de réfrigération selon la revendication 1, dans lequel le compresseur (4a, 4b) respectif est du type à capacité variable entraîné par un inverseur.

5. Appareil à cycle de réfrigération selon la revendication 1, comprenant en outre :

   un premier détecteur de température (T1) configuré pour détecter une température du premier tube d'équilibrage d'huile (41) respectif à un point plus en aval que le premier dispositif de réduction de pression (43) ;
   un deuxième détecteur de température (T3) configuré pour détecter une température du tube de dérivation (47) à un point plus en aval que le deuxième dispositif de réduction de pression ;
   un troisième détecteur de température (T2) configuré pour détecter la température de l'huile sortant dudit séparateur de gaz/liquide (60) ; et
   une section de détection configurée pour détecter une quantité d'huile dans le carter du compresseur respectif selon une température de détection du détecteur de température respectif.

6. Appareil à cycle de réfrigération selon la revendication 5, comprenant en outre :

   une section de décision configurée pour décider si la quantité d'huile détectée par la section de détection est suffisante ou pas ; et

une section de commande (50) configurée pour, lorsque la section de décision décide que la quantité d'huile est insuffisante, ouvrir la deuxième vanne d'ouverture/fermeture (V2) au niveau de l'unité externe (2a) du côté bas de la quantité d'huile et ouvrir la première vanne d'ouverture/fermeture (V1) et la troisième vanne d'ouverture/fermeture (V3) sur les unités externes (2b) restantes.

FIG.1

FIG.2

F I G. 3

FIG.4

**EP 2 397 793 B1**

**REFERENCES CITED IN THE DESCRIPTION**

**Patent documents cited in the description**

- JP 3197768 B

- JP 2002242833 A